# EUROPÄISCHE PATENTSCHRIFT

(11) **EP 0 704 957 B1**
(45) Veröffentlichungstag und Bekanntmachung des Hinweises auf die Patenterteilung: **07.01.1999**
(21) Anmeldenummer: 95114601.8
(22) Anmeldetag: 16.09.1995
(51) Int. Cl.: H02M 3/337, H02M 7/5387

(54) **Stromquelle für die Energieversorgung eines Verbraucherkreises**
Current source for power supply of a consumer circuit
Source de courant pour alimentation de puissance d'un circuit consommateur

(30) Priorität: 30.09.1994 AT 1865/94
(43) Veröffentlichungstag der Anmeldung: 03.04.1996
(73) Patentinhaber: FRONIUS SCHWEISSMASCHINEN KG AUSTRIA, A-4600 Wels/Thalheim (AT)
(72) Erfinder: Ecker, Josef, A-4132 Lembach (AT)
(74) Vertreter: Secklehner, Günter, Dr.

(56) Entgegenhaltungen:
- US-A- 4 635 181
- PROCEEDINGS OF THE INTERNATIONAL CONFERENCE ON INDUSTRIAL ELECTRONI CONTROL AND INSTRUMENTATION. (IECON), BOLOGNA, SEPT. 5 - 9, 1994 PLENARY SESSION POWER ELECTRONICS, Bd. 1 OF 3, 5.September 1994, INSTITUTE OF ELECTRICAL AND ELECTRONICS ENGINEERS, Seiten 316-321, XP000528614 MUTSUTOSHI OHSUGI ET AL: "THE ANALYSES OF ZVS TURN-OFF LOSS AND THE NEW SNUBBER CIRCUIT FOR THE ARCP INVERTER"

## Beschreibung

Die Erfindung betrifft eine Stromquelle für die Energieversorgung eines Verbraucherkreises, wie es im Oberbegriff des Patentanspruches 1 beschrieben ist.

Aus der US 4,635,181 A ist eine Stromquelle für die Energieversorgung eines Verbraucherkreises eines Gleichstromverbrauchers bekannt, bei der über eine Vollbrücke der Verbraucher von einer Energiequelle versorgt wird. Um die einzelnen Schalter der Vollbrücke stromlos abschalten zu können, ist für jeweils einen Brückenzweig ein Entlastungsnetzwerk mit zwei Kondensatoren, die mit dem positiven und negativen Potential verbunden sind, angeordnet. Das Entlastungsnetzwerk wird über zwei parallel zueinander angeordnete und gegengleich gepolte Schaltvorrichtungen aktiviert, wobei die Aktivierung über Sekundärspulen eines Transformators erfolgt. Die Primärwicklung des Transformators ist dabei in der Verbindungsleitung zwischen den beiden Brückenzweigen angeordnet, sodaß aufgrund des Stromflusses über die Primärwicklung die Schaltvorrichtungen angesteuert werden.

Weiteres ist aus dem Artikel "The Analyses of ZVS Turn-off Loss and the New Snubber Circuit for the ARCP Inverter" Konferenzbericht IECON'94, Bologna; seiten 316-321 eine Stromquelle für die Versorgung eines Verbrauchers bekannt, bei der die Ansteuerung der beiden für die Entlastungsnetzwerke angeordneten Schaltvorrichtungen jedoch über eine Steuervorrichtung erfolgt. Weiters ist aus diesem Artikel die Verwendung von IGBT's als Schalter für die einzelnen Brückenzweige der Vollbrücke bekannt.

Bekannte Stromquellen für die Energieversorgung eines Verbraucherkreises eines Gleichstromverbrauchers sind zwischen einem Wechselspannungsnetz und einem Verbraucherkreis mit einem Zwischenkreis versehen. Der Zwischenkreis umfaßt zwei Verbraucherversorgungsleitungen, von welchen jeweils eine am positiven und die andere am negativen Potential anliegt. Im Zwischenkreis zwischen diesen Versorgungsleitungen wird eine Vollbrücke aufgebaut, die jeweils zwei zueinander parallel geschaltete Schaltvorrichtungen aufweist, wobei jede dieser Schaltvorrichtungen zwei in Reihe geschaltete Schalter aufweist. Die beiden Schaltvorrichtungen sind zwischen den jeweiligen Schaltern mit einer Verbindungsleitung verbunden, in die eine durch einen Trafo gebildete Übertragungsvorrichtung zwischengeschaltet ist. Beidseits der Übertragungsvorrichtung zwischen der Verbindungsleitung und dem positiven bzw. negativen Potential ist jeweils eine Freilaufdiode angeordnet. Die Schalter der Schaltvorrichtungen sind über Steuerleitungen an der Steuervorrichtung angeschlossen. Nachteilig ist bei einer derartigen Stromquelle die hohe Verlustleistung, die beim Abschalten der Schalter entsteht.

Der vorliegenden Erfindung liegt die Aufgabe zugrunde, eine Stromquelle zur Versorgung eines Gleichstromverbrauchers zu schaffen, die bei hoher Lebensdauer nur eine geringe Verlustleistung aufweist.

Die Aufgabe der vorliegenden Erfindung wird durch die Merkmale im Kennzeichenteil des Patentanspruches 1 gelöst. Vorteilhaft ist bei dieser Lösung, daß durch die Ausführung der Stromquelle durch die Verwendung von kostengünstigen Isolated-Gate-Bipolar-Transistoren eine hohe Lebensdauer erreicht wird, indem durch die Anordnung der Hilfsschalter und diesen zugeordneten Energiespeichern ein beinah stromloses Abschalten der Schalter der Schaltvorrichtungen erreicht wird und somit die Verlustleistung beim Abschalten eines Schalters verhindert wird. Damit wird durch Unterbindung dieser Verlustleistung eine übermäßige Wärmebeanspruchung der Schalter verhindert, wodurch die zuvor genannten Isolated-Gate-Bipolar-Transistoren eingesetzt werden können.

Vorteilhaft ist auch eine Ausführungsvariante nach Patentanspruch 2, da dadurch eine Kostenreduzierung der Vollbrücke erreicht wird.

Schließlich ist aber auch eine Ausführung nach Patentanspruch 3 von Vorteil, da dadurch ein genauer Zeitpunkt zum Abschalten der Hilfsschalter festgelegt werden kann, wodurch keine Energie in der Übertragungsvorrichtung gespeichert bleibt.

Die Erfindung wird nachfolgend anhand der in den Zeichnungen dargestellten Ausführungsbeispiele näher erläutert.

Es zeigen:
- Fig. 1: ein Schaltschema einer Stromquelle mit einer Vollbrücke in vereinfachter schematischer Darstellung;
- Fig. 2: eine erfindungsgemäße Vollbrücke zur Erzeugung einer Gleichspannung in vereinfachter schematischer Darstellung;
- Fig. 3: ein Diagramm, in dem die Abschaltverluste eines Schalters, ohne der erfindungsgemäßen Lösung der Vollbrücke gezeigt sind;
- Fig. 4: ein Diagramm, in dem die Abschaltverluste eines Schalters mit der erfindungsgemäßen Lösung gezeigt sind.

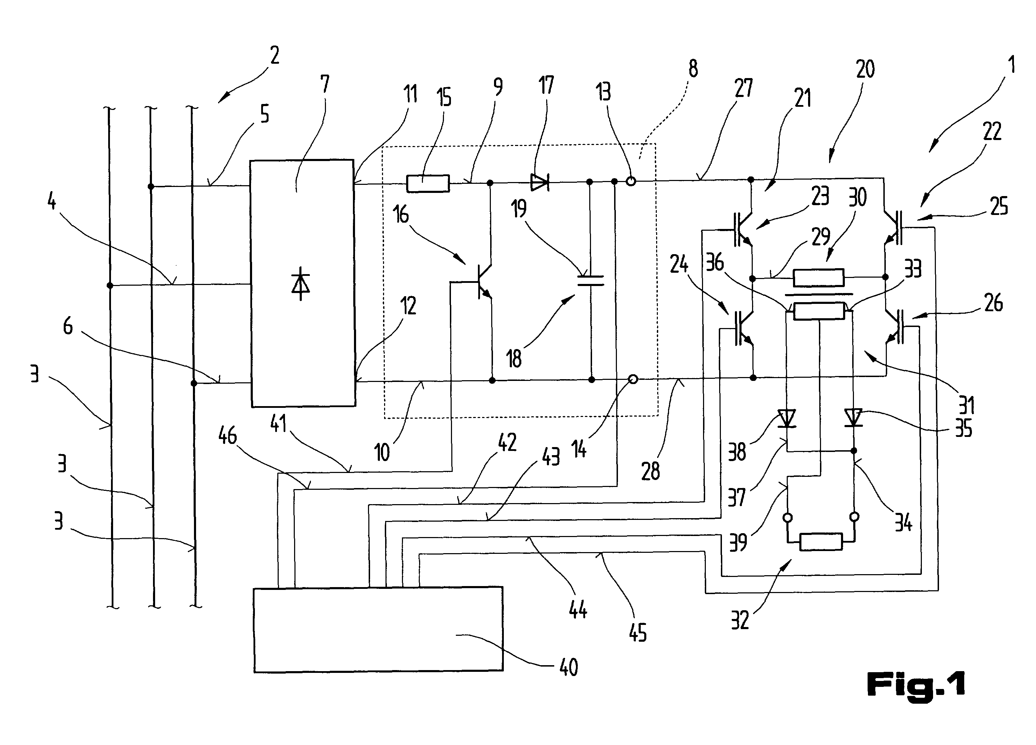

In Fig. 1 ist eine Stromquelle 1, die an einem Wechselspannungsnetz 2 angeschlossen ist, gezeigt. Das Wechselspannungsnetz 2 wird in unserem Beispiel aus einem dreiphasigen Wechselspannungsnetz, das aus drei Phasenleitern 3 besteht, gebildet. Die Stromquelle 1 wird dabei über Zuleitungen 4, 5, 6 an das Wechselspannungsnetz 2 angeschlossen. Weiters weist die Stromquelle 1 einen Gleichrichter 7 auf, der mit den Zuleitungen 4, 5, 6 verbunden ist. Der Gleichrichter 7 kann entweder durch einen Brückengleichrichter oder durch einzelne Dioden gebildet werden.

Ein Zwischenkreis 8 ist über Versorgungsleitungen 9, 10 mit Ausgängen 11, 12 des Gleichrichters 7 verbunden. Der Gleichrichter 7 versorgt dabei die Versorgungsleitung 9 mit dem positiven Potential und die Versorgungsleitung 10 mit dem negativen Potential.

Am Ausgang des Zwischenkreises 8 sind Klemmen 13, 14 an den Versorgungsleitungen 9, 10 angeschlossen. Der Zwischenkreis 8 weist dabei eine Induktivität 15, die zwischen dem Ausgang 11 des Gleichrichters 7 und der Klemme 13 in der Versorgungsleitung 9 zwischengeschaltet ist, auf. Weiters weist der Zwischenkreis 8 einen Schalter 16, der bevorzugt aus einem Transistor gebildet ist, auf. Dieser Schalter 16 wird dabei parallel zum Gleichrichter 7. jedoch zwischen der Induktivität 15 und der Klemme 13 mit der Versorgungsleitung 9 und zwischen dem Ausgang 12 und der Klemme 14 mit der Versorgungsleitung 10 verbunden. Eine Diode 17 ist weiters in der Versorgungsleitung 9 zwischen dem Verbindungspunkt des Schalters 16 und der Klemme 13 in Durchlaßrichtung angeordnet. Parallel zum Schalter 16 ist ein Energiespeicher 18, der durch einen Kondensator 19 gebildet wird, angeordnet, wobei der Kondensator 19 zwischen der Diode 17 und der Klemme 13 sowie zwischen dem Verbindungspunkt des Schalters 16 in der Versorgungsleitung 10 und der Klemme 14 verbunden ist. Am Ausgang des Zwischenkreises 8, also an den Klemmen 13, 14, ist weiters eine Vollbrücke 20 angeschlossen. Die Vollbrücke 20 wird dabei aus zwei Schaltvorrichtungen 21, 22 gebildet. Die Schaltvorrichtungen 21, 22 werden dabei aus zwei in Serie geschalteten Schaltern 23, 24 und 25, 26 gebildet. Der Eingang der Schaltvorrichtung 21 wird dabei mit der Klemme 13 über eine Leitung 27 verbunden. Der Ausgang der Schaltvorrichtung 21 wird über eine Leitung 28 mit der Klemme 14 verbunden, wodurch die Schaltvorrichtung 21 parallel zum Gleichrichter 7 geschaltet ist. Die zweite Schaltvorrichtung 22 wird dabei parallel zur Schaltvorrichtung 21, also mit den Leitungen 27, 28 verbunden. Zwischen den zwei in Serie geschalteten Schaltern 23, 24 wird eine Verbindungsleitung 29 mit der Schaltvorrichtung 21 verbunden. Diese Verbindungsleitung 29 ist unter Zwischenschaltung einer Übertragungsvorrichtung 30 wiederum zwischen den Schaltern 25, 26 der Schaltvorrichtung 22 angeschlossen.

Die Übertragungsvorrichtung 30 versorgt über eine Mittelpunktschaltung 31 einen Gleichstromverbraucher 32 mit dem positiven und negativen Potential. Ein Ausgang 33 der Übertragungsvorrichtung 30 versorgt über eine Leitung 34 unter Zwischenschaltung einer Diode 35 den Gleichstromverbraucher 32 mit dem positiven Potential. Ein weiterer Ausgang 36 der Übertragungsvorrichtung 30 wird über eine Leitung 37 unter Zwischenschaltung einer Diode 38 mit der Leitung 34 zwischen der Diode 35 und dem Gleichstromverbraucher 32 verbunden. Über eine Leitung 39 wird der Gleichstromverbraucher 32 mit dem negativen Potential versorgt.

Weiters weist die Stromquelle 1 eine Steuervorrichtung 40 auf. Die Steuervorrichtung 40 steuert dabei über Leitungen 41 bis 45 die Schalter 16 und 23 bis 26 an.

Wird nun die Stromquelle 1, also der Gleichrichter 7, der Zwischenkreis 8 und die Vollbrücke 20 an das Wechselspannungsnetz 2 angeschlossen, so richtet der Gleichrichter 7 über die Zuleitung 4, 5, 6 die Wechselspannung vom Wechselspannungsnetz gleich, d.h., daß der Gleichrichter 7 die Versorgungsleitungen 9, 10 mit einer Gleichspannung beaufschlagt, wobei die Versorgungsleitung 9 das positive Potential und die Versorgungsleitung 10 das negative Potential umfaßt.

Die Steuervorrichtung 40 steuert anschließend den Zwischenkreis 8 so an, daß der Schalter 16 geschlossen wird, wodurch in der Induktivität 15 Energie gespeichert wird. Anschließend öffnet die Steuervorrichtung 40 den Schalter 16, wodurch die Energie in der Induktivität 15 über die Diode 17 in den Energiespeicher 18 fließen kann. Die Steuerung des Zwischenkreises 8 erfolgt dabei von der Steuervorrichtung 40 durch ständiges Vergleichen der Ist-Spannung an der Klemme 13 mit einem voreinstellbaren Sollwert. Die Ist-Spannung an der Klemme 13 wird dabei über eine Leitung 46 an die Steuervorrichtung 40 weitergeleitet. Die Steuervorrichtung 40 steuert nun den Schalter 16 so an, daß durch die Einschaltdauer des Schalters 16 die Höhe der Spannung am Ausgang des Zwischenkreises 8 also an den Klemmen 13, 14 gesteuert werden kann.

Diese Ausführungsform des Zwischenkreises 8 in Form eines Hochsetzstellers wurde deshalb gewählt, da die Höhe der Spannung an den Klemmen 13, 14 von der Spannung am Wechselspannungsnetz 2 unabhängig ist, d.h., daß bei Schwankungen der Eingangsspannung des Wechselspannungsnetzes 2 diese von dem Zwischenkreis 8 bzw. der Steuervorrichtung 40 ausgeregelt werden kann und somit immer eine konstante Spannung an den Klemmen 13, 14 vorhanden ist. Es ist jedoch auch möglich, andere Gleichspannungsquellen, wie beispielsweise einen Gleichrichter mit einem Kondensator, vor der Vollbrücke 20 anzuordnen.

Unabhängig von der Steuerung des Schalters 16 steuert die Steuervorrichtung 40 die Schalter 23 und 26 über die Leitungen 42 und 44 an. Durch das Ansteuern des Schalters 23 und 26 fließt nun das positive Potential von der Klemme 13 über den Schalter 23, die Verbindungsleitung 29 der Übertragungsvorrichtung 30, den Schalter 26 an die Klemme 14, also zum negativen Potential bzw. dem Energiespeicher 18, wodurch der Stromkreis geschlossen ist. Durch das Durchströmen des ersten Teils der Übertragungsvorrichtung 30 wird in dem zweiten Teil der Übertragungsvorrichtung 30 ein Strom induziert, wodurch der Gleichstromverbraucher 32 mit dem positiven und negativen Potential versorgt werden kann. Nach einer bestimmten voreinstellbaren Zeitdauer öffnet die Steuervorrichtung 40 die Schalter 23 und 26 und steuert über die Leitungen 43 und 45 die Schalter 24 und 25 an, wodurch nun das positive Potential von der Klemme 13 über den Schalter 25 den ersten Teil der Übertragungsvorrichtung 30 und den Schalter 24 an die Klemme 14 fließen kann. Wie nun ersichtlich ist, fließt der Strom jeweils von der Klemme 13 zur Klemme 14, jedoch in unterschiedlichen Richtungen, d.h., daß der Strom einmal von dem Schalter 23 über die Übertragungsvorrichtung 30 in Richtung des Schalters 26 und anschließend von dem Schalter 25 über die Übertragungsvorrichtung 30 an den Schalter 24 fließt, wodurch abwechslungsweise die Übertragungsvorrichtung 30 in verschiedenen Stromrichtungen betrieben wird. Durch diese Richtungsänderung des Stromflusses wird aus der an den Klemmen 13, 14 anliegenden Gleichspannung eine Wechselspannung mit hoher Frequenz an die Übertragungsvorrichtung 30 angelegt, wodurch auf der Sekundärseite der Übertragungsvorrichtung 30 ein Strom induziert wird und dieser anschließend wieder gleichgerichtet wird, wodurch der Gleichstromverbraucher 32 mit einem positiven und negativen Potential versorgt werden kann.

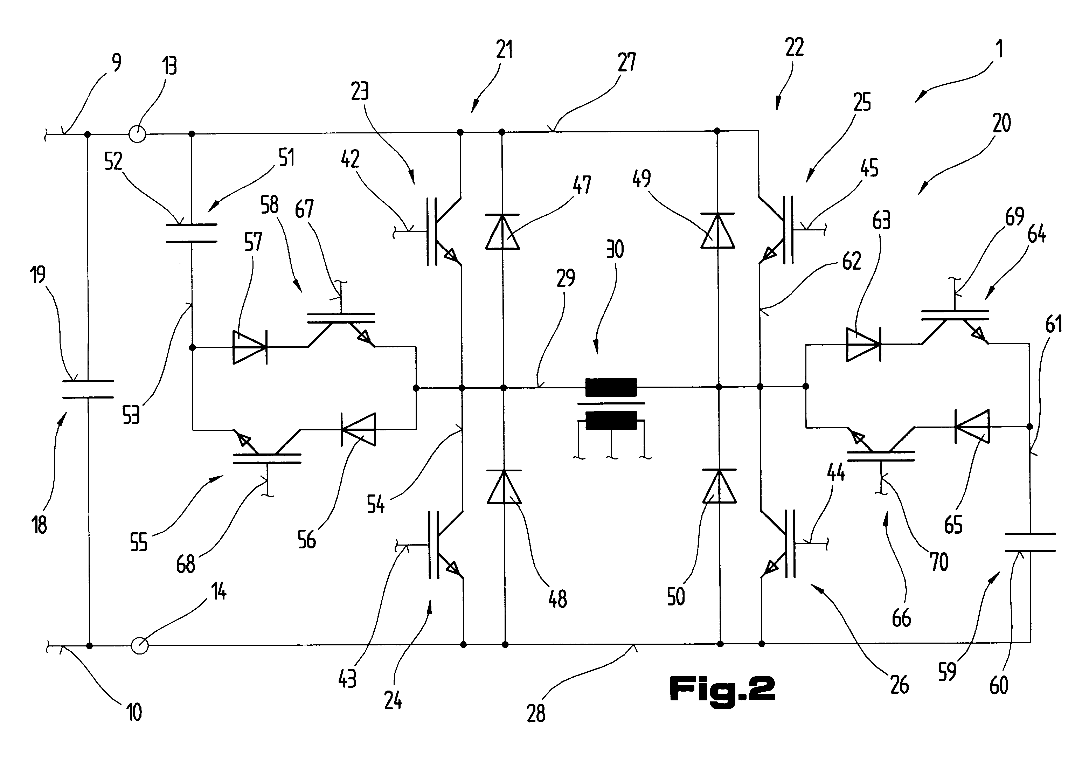

In Fig. 2 ist nun die erfindungsgemäße Vollbrücke 20, die, wie in Fig. 1 beschrieben, aus den Schaltvorrichtungen 21, 22 und der Übertragungsvorrichtung 30 gebildet wird, gezeigt, wobei die Schalter 23 bis 26 nun aus Isolated-Gate-Bipolar-Transistoren gebildet werden. Der Unterschied zu einem normalen Power-Mos-Transistor und einem Isolated-Gate-Bipolar-Transistor liegt darin, daß beim Abschalten des Isolated-Gate-Bipolar-Transistors ein Stromschwanz auftritt, der bei höherer Schaltfrequenz, wie bei der gezeigten Vollbrücke 20, zur Zerstörung führen kann. Dieser Nachteil kann durch die nachstehende Ausführungsform der Vollbrükke 20 zum Großteil kompensiert werden.

Die Vollbrücke 20 wird dabei durch Freilaufdioden 47 bis 50, die parallel zu den einzelnen Schaltern 23 bis 26 angeordnet sind, ergänzt.

Weiters wird ein Energiespeicher 51, der durch einen Kondensator 52 gebildet ist, über eine Energieleitung 53 zwischen der Leitung 27, also der Klemme 13 und einer Leitung 54, die die Schalter 23 und 24 der Schaltvorrichtung 21 verbindet, angeordnet. Zwischen dem Kondensator 52 und dem Knotenpunkt zwischen der Energieleitung 53 und der Leitung 54 ist ein weiterer Hilfsschalter 55, der wiederum durch einen Isolated-Gate-Bipolar-Transistor gebildet wird, und eine Diode 56, die beide in Durchlaßrichtung zum Energiespeicher 51 angeordnet sind, zwischengeschaltet. Parallel zu der Kombination des Hilfsschalters 55 und der Diode 56 ist eine weitere Kombination einer Diode 57 und eines Hilfsschalters 58, der wiederum aus einem Isolated-Gate-Bipolar-Transistor gebildet wird, angeordnet, wobei dabei die Diode 57 und der Hilfsschalter 58 nun in Durchlaßrichtung vom Knotenpunkt der Energieleitung 53 zur Leitung 54 angeordnet sind. Die Dioden 56 und 57 können auch an den Eingängen oder den Ausgängen der Hilfsschalter 55 und 58 angeordnet werden.

Ein weiterer Energiespeicher 59, der wiederum durch einen Kondensator 60 gebildet wird, ist über eine Energieleitung 61, die mit einer Leitung 62, die die Schalter 25 und 26 der Schaltvorrichtung 22 verbindet, und der Leitung 28 angeordnet. Gleichzeitig ist zwischen dem Verbindungspunkt der Energieleitung 61 mit der Leitung 62 und dem Energiespeicher 59 eine Kombination einer Diode 63 und eines Hilfsschalters 64, der wiederum aus einem Isolated-Gate-Bipolar-Transistor gebildet wird, zwischengeschaltet, wobei dabei die Diode 63 und der Hilfsschalter 64 in Durchlaßrichtung zum Energiespeicher 59 angeordnet ist. Parallel zu der Kombination der Diode 63 und dem Hilfsschalter 64 ist eine weitere Kombination einer Diode 65 und eines Hilfsschalters 66, der wiederum aus einem Isolated-Gate-Bipolar-Transistor gebildet wird, angeordnet, wobei dabei die Diode 65 und der Hilfsschalter 66 in Durchlaßrichtung zum Knotenpunkt der Energieleitung 61 mit der Leitung 62 angeordnet sind. Die Dioden 63 und 65 können an den Eingängen oder Ausgängen der Hilfsschalter 64 und 66 angeschlossen werden. Die zusätzlich angeordneten Hilfsschalter 55, 58, 64 und 66 sind wiederum über Leitungen 67 bis 70 mit der Steuervorrichtung 40 verbunden.

Durch die Anordnung der zusätzlichen Bauteile können nun die Schalter 23 bis 26 stromlos von der Steuervorrichtung 40 abgeschaltet werden, wodurch der Nachteil des Stromschwanzes bei Verwendung von Isolated-Gate-Bipolar-Transistoren fast vollständig bereinigt werden kann.

Die Funktion der Vollbrücke 20 erfolgt nun insofern, indaß die Steuervorrichtung 40 über die Leitungen 42 und 44 die Schalter 23 und 26 ansteuern, wodurch der Strom, wie in Fig. 1 beschrieben, von der Klemme 13 über die Leitung 27, den Schalter 23 und die Verbindungsleitung 29 an den ersten Teil der Übertragungsvorrichtung 30 fließen kann. Von dem ersten Teil der Übertragungsvorrichtung 30 fließt der Strom weiter über die Verbindungsleitung 29, den Schalter 26 an die Leitung 28, wodurch der Stromkreis zwischen dem positiven und negativen Potential geschlossen ist. Durch das Durchströmen des ersten Teils der Übertragungsvorrichtung 30 wird nun in dem zweiten Teil der Übertragungsvorrichtung 30, wie in Fig. 1 beschrieben, ein Strom induziert, wodurch der Gleichstromverbraucher 32 mit Strom und Spannung versorgt wird. Dabei ist es möglich, daß die Übertragungsvorrichtung 30 durch unterschiedliche Windungszahlen die Spannung am Gleichstromverbraucher 32 herab- oder heraufsetzt, wodurch der Gleichstromverbraucher 32 mehr oder weniger Strom bzw. Spannung zur Verfügung hat.

Gleichzeitig mit dem Ansteuern der Schalter 23 und 26 steuert die Steuervorrichtung 40 über die Leitungen 67 und 69 die Hilfsschalter 58 und 64 an.

Nach Ablauf einer voreinstellbaren Zeitdauer schaltet die Steuervorrichtung 40 die Schalter 23 und 26 über die Leitungen 42 und 44 ab. Die Hilfsschalter 58 und 64 bleiben jedoch noch eine gewisse voreinstellbare Zeitdauer eingeschaltet. Da jedoch die Schalter 23 und 26 aus Isolated-Gate-Bipolar-Transistoren gebildet sind, würden diese Schalter 23 und 26, ohne die zuvor beschriebene Erweiterung der Vollbrücke 20 durch die gespeicherte Energie in der Übertragungsvorrichtung 30 den Stromfluß nicht prompt, wie ein normaler Power-Mos-Transistor abschalten, sondern am Schalter 23 und 26 würde der typische Stromschwanz auftreten, der zu hohen Verlustleistungen führt und zu einer Zerstörung der Schalter 23, 26 führen würde.

Da jedoch die Hilfsschalter 58 und 64 eingeschaltet sind, kann die gespeicherte Energie durch Anstieg der Spannung am Knotenpunkt der Verbindungsleitung 29 mit der Leitung 62 und am Energiespeicher 59 auf die Betriebsspannung ansteigen, wodurch sich zur Abgabe der gespeicherten Energie in der Übertragungsvorrichtung 30 ein Stromkreis von der Übertragungsvorrichtung 30 über die Diode 63, den Hilfsschalter 64, den Energiespeicher 59, 18, 51, der Diode 57, den Hilfsschalter 58 an die Übertragungsvorrichtung bildet und die gespeicherte Energie an die Energiespeicher 51 und 59 abgegeben wird, wodurch die Schalter 26 und 23 stromlos und somit eigenständig abschalten können.

Nachdem eine voreinstellbare Zeitdauer abgelaufen ist, schaltet die Steuervorrichtung 40 über die Leitungen 67 und 69 die Hilfsschalter 58 und 64 ab. Dabei werden jedoch die Hilfsschalter 58 und 64 stromlos abgeschaltet, da die Zeitdauer zum Abschalten der Hilfsschalter 58 und 64 so dimensioniert ist, daß die in der Übertragungsvorrichtung 30 gespeicherte Energie bereits in die Kondensatoren 52 und 60 geflossen ist, wodurch kein Strom mehr über die Hilfsschalter 58 und 64 fließen kann.

Nachdem die Hilfsschalter 58 und 64 abgeschaltet wurden, schaltet die Steuervorrichtung 40 über die Leitungen 43 und 45 sowie 68 und 70 die Schalter 24, 25 und der Hilfsschalter 55 und 66 ein, wodurch nun der Strom von der Klemme 13 über den Schalter 25, die Übertragungsvorrichtung 30 und den Schalter 24 an das negative Potential der Klemme 14 fließen kann, und der Stromfluß nun in umgekehrter Richtung durch die Übertragungsvorrichtung 30 fließt und somit wiederum Strom und Spannung an den Gleichstromverbraucher 32 fließen kann. Würde nämlich keine Umpolung der Übertragungsvorrichtung 30 erfolgen, so würde nach einer gewissen Laufzeit die Induktivität in der Übertragungsvorrichtung 30 gesättigt, wodurch kein Strom in dem zweiten Teil der Übertragungsvorrichtung 30 induziert würde und somit der Gleichstromverbraucher 32 nicht mit Strom und Spannung versorgt werden kann. Die Hilfs-55 und 66 sind jedoch, während die Schalter 25 und 24 eingeschaltet sind, stromlos.

Nachdem die voreinstellbare Zeitdauer zum Ein- und Ausschalten der Schalter 23 bis 26 abgelaufen ist, schaltet die Steuervorrichtung 40 die Schalter 25 und 24 ab, indem sie die Steuerspannung an den Leitungen 45 bzw. 43 wegnimmt.

Durch das Abschalten der Schalter 24, 25 kommutiert die gespeicherte Energie in der Übertragungsvorrichtung 30 sofort über die Hilfsschalter 55 und 66 sowie über die Dioden 56, 65 an die Energiespeicher 51 und 59. Da jedoch der Stromfluß durch die Übertragungsvorrichtung 30 nun in umgekehrter Richtung erfolgte, bildet sich nun ein neuerlicher Stromkreis von der Übertragungsvorrichtung 30 über die Diode 56, den Hilfsschalter 55, die Energiespeicher 51, 18, 59, sowie die Diode 65, den Hilfsschalter 66 an die Übertragungsvorrichtung 30, wodurch die gespeicherten Energien in der Übertragungsvorrichtung 30, die der gespeicherten Energie in den Energiespeichern 51 und 59 entgegengesetzt wird und somit werden die Energiespeicher 51 und 59 sowie die Übertragungsvorrichtung 30 entladen. Das Entladen der Energiespeicher 51 und 59 kommt daher, da bei dem zuvor beschriebenen Schaltzyklus die Energiespeicher 51 und 59 mit der in der Übertragungsvorrichtung 30 gespeicherten Energie gemäß dem zuvor beschriebenen Stromkreis geladen wurden. Da jedoch nun das positive Potential der gespeicherten Energie vom Knotenpunkt der Energieleitung 53 mit der Leitung 54 in Richtung des Kondensators 52 und nicht wie zuvor vom Knotenpunkt der Leitung 62 mit der Energieleitung 61 in Richtung des Kondensators 60 fließt, werden die Kondensatoren 52 und 60 durch Umpolung der Polarität entladen.

Gleichzeitig wird der Kondensator 60 mit dem negativen Potential versorgt, d.h. daß dieser wiederum umgepolt wird und die Energie im gespeicherten Kondensator 60 nur über die Leitung 28 an die Versorgungsleitung 10 bzw. die Klemme 14 rückgeführt wird. Bei veränderlicher Last, d.h. bei unterschiedlichen Lastströmen, kann das Laden und Entladen der Kondensatoren 52 und 60 unterschiedlich sein, d.h. daß einmal der Kondensator 52 und 60 voll geladen bzw. voll entladen oder daß dieser teilweise geladen und teilweise entladen wird.

Vereinfacht kann man nun sagen, daß die Kondensatoren 52 und 60 von der gespeicherten Energie in der Übertragungsvorrichtung 30 immer umgeladen werden und somit nahezu kein Stromschwanz an den Schaltern 23 bis 26 auftritt, da der Strom an diesen parallel vorbeigeführt wird. An den weiteren Hilfsschaltern 55, 58, 64 und 66 tritt ebenfalls kein Stromschwanz auf, weil nach Abklingen der gespeicherten Energie in der Übertragungsvorrichtung 30 der Strom durch die Hilfsschalter 55, 58, 64 und 66 zu Null wird.

Die überlicherweise sehr hohen Abschaltverluste der Schalter 23 bis 26 werden hiermit ausschließlich auf die leitenden Verluste von den jeweilig eingeschalteten weiteren Hilfsschaltern 55, 58, 64 und 66 und den zusätzlich angeordneten Dioden 56, 57, 63 und 65 sowie der Kondensatoren 52 und 60 beschränkt. Diese Verluste treten nur dann auf, wenn die weiteren Hilfsschalter 55, 58, 64 und 66 eingeschaltet sind, wobei die Schalter 23 bis 26 ausgeschaltet sind.

Weiters wird die gespeicherte Energie in der Übertragungsvorrichtung 30 immer in die Kondensatoren 52 und 60 gespeichert und geht daher nie wie bei den zum Stand der Technik zählenden Schaltungen verloren, sondern sie pendelt zwischen der Übertragungsvorrichtung 30 und den Energiespeichern 51, 59 hin und her.

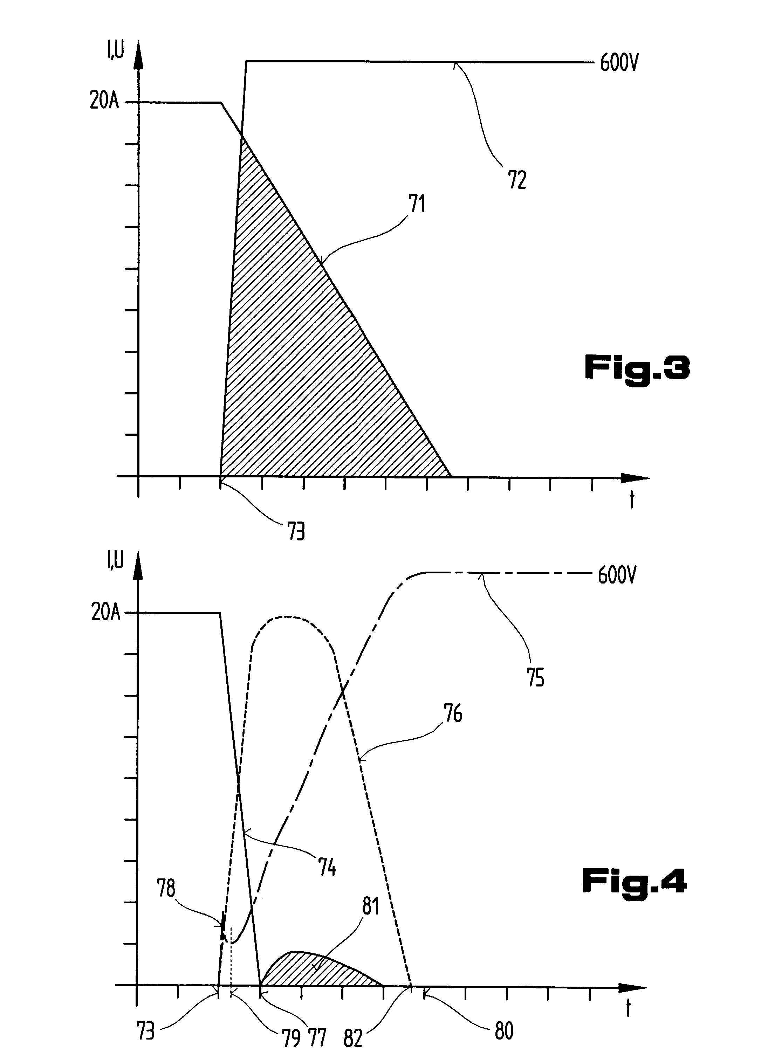

In Fig. 3 und 4 ist nun das Abschaltverhalten eines der Schalter 23 bis 26, beispielsweise des Schalters 26, gezeigt. Dabei ist in Fig. 3 das Abschaltverhalten ohne die erfindungsgemäße Erweiterung der Vollbrücke 20 und in Fig. 4 das Abschalten des Schalters 26 mit der erfindungsgemäßen Erweiterung der Vollbrücke 20 gezeigt. Der Schalter 26 wird dabei, wie zuvor beschrieben, aus einem Isolated-Gate-Bipolar-Transistor gebildet. Auf der Ordinate wird der Strom I und U und auf der Abszisse die Zeit t aufgetragen.

In Fig. 3 ist nun das Ausschaltverhalten des Schalters 26 ohne der erfindungsgemäßen Weiterbildung gezeigt. Dabei entspricht eine Stromkennlinie 71 dem Stromverlauf des Abschaltzyklus des Schalters 26, der zwischen dem Knotenpunkt der Verbindungsleitung 29 mit der Leitung 62 und zur Leitung 28 gemessen wird. Weiters ist durch eine Spannungskennlinie 72 der Spannungsverlauf über den Schalter 26 eingetragen. Wie nun aus dem Diagramm in Fig. 3 zu ersehen ist, wird zum Zeitpunkt 73 der Schalter 26 von der Steuervorrichtung 40 abgeschaltet, wodurch der Strom zu sinken beginnt und die Spannung sprunghaft auf die Betriebsspannung des Zwischenkreises 8 ansteigt. Durch die in der Übertragungsvorrichtung 30 gespeicherte Energie bleibt der Schalter 26 selbständig leitend, d.h. daß der Strom langsam zu sinken beginnt und nach Erreichen der Abszisse abgeschaltet ist. Die Fläche innerhalb der Stromkennlinie 71 und der Spannungskennlinie 72 würde als Verlustleistung am Schalter 26 entstehen, d.h. daß sich durch die relativ hohe Verlustleistung, wie schraffiert ersichtlich, der Schalter 26 sehr stark erwärmt, was zu einer Zerstörung führen könnte.

In Fig. 4 ist dasselbe Abschaltverhalten desselben Schalters 26 gezeigt, wobei hierfür die erfindungsgemäße Erweiterung der Vollbrücke 20 eingesetzt ist. In diesem Diagramm ist wiederum eine Stromkennlinie 74 des Schalters 26 und eine Spannungskennlinie 75 des Schalters 26, die der Kondensatorspannung des Kondensators 60 entspricht, aufgetragen. Weiters ist eine Stromkennlinie 76 des Hilfsschalters 64, die auch der Diode 63 entspricht, aufgetragen, wodurch man erkennen kann, daß die gespeicherte Energie der Übertragungsvorrichtung 30 durch den Hilfsschalter 64 und die Diode 63 an den Kondensator 60 fließt.

Zu einem Zeitpunkt 73 wird wiederum der Schalter 26 von der Steuervorrichtung 40 abgeschaltet, wodurch der Strom durch den Schalter 26 auf Null sinkt. Dies ist zum Zeitpunkt 77 erreicht. Gleichzeitig versucht die Spannung am Schalter 26 bzw. am Kondensator 60 zu steigen. Dabei versucht die Spannung, wie in Fig. 3 beschrieben, rasch auf die Betriebsspannung des Zwischenkreises 8 zu steigen, wie dies durch die Spannungsspitze 78 ersichtlich ist. Diese Spannungsspitze 78 entsteht dadurch, da der Hilfsschalter 64 bzw. die Diode 63 eine gewisse Zeit brauchen, um die Energie von der Übertragungsvorrichtung 30 an den Energiespeicher 59 durchzuschalten.

Nachdem der Hilfsschalter 64 durchgeschaltet hat, sinkt die Spannung am Schalter 26 bzw. am Kondensator 60 wieder ab und steigt anschließend langsam bis auf die entsprechende Betriebsspannung an, wie dies zwischen den Zeitpunkten 79 und 80 ersichtlich ist. Ist die Spannung am Kondensator 60 bzw. am Schalter 26 auf ein gewisses Maß angestiegen, so wird der Schalter 26 wieder geringfügig leitend, d.h. ein Teil des Stromes, der durch den Hilfsschalter 64 und die Diode 63 an den Kondensator 60 fließt, wie dies die Stromkennlinie 76 zeigt, fließt nun ebenfalls durch den Schalter 26, wie dies der Stromschwanz 81 an der Stromkennlinie 74 des Schalters 26 zeigt. Dieser Stromschwanz 81 steigt entsprechend der Spannung bzw. des Stromes von der gespeicherten Energie, auf einen gewissen Wert an und baut sich anschließend langsam ab. Dieser Stromschwanz 81 bildet nun die Verluste, die vom Isolated-Gate-Bipolar-Transistor verursacht werden. An der weiteren Stromkennlinie 76 des Hilfsschalters 64 ist der Stromtluß der gespeicherten Energie aus der Übertragungsvorrichtung 30 zum Kondensator 60 dargestellt. Nachdem die Energie vollständig von der Übertragungsvorrichtung 30 abgegeben wurde, wird der Strom, wie zu einem Zeitpunkt 82 gezeigt, zu Null und der Kondensator 60 ist vollständig geladen bzw. entladen. Das Einschalten aller Schalter 23 bis 26 und der Hilfsschalter 55, 58, 64, 66 erfolgt ebenfalls stromlos.

Die Steuervorrichtung 40 kann nun den Hilfsschalter 64 stromlos abschalten, wodurch keine weiteren Verluste eines Stromschwanzes beim Abschalten des Hilfsschalters 64 entstehen, da kein Strom mehr in der Übertragungsvorrichtung 30 gespeichert ist.

Vergleicht man nun die beiden Diagramme bzw. die Verlustleistungen des Schalters 26, die schraffiert dargestellt sind, so stellt man fest, daß durch die erfindungsgemäße Lösung eine wesentliche Verringerung der Ausschaltverlustleistung des Isolated-Gate-Bipolar-Transistors erreicht wird, wodurch durch diese Anordnung der zusätzlichen Bauteile des Isolated-Gate-Bipolar-Transistors in einer Vollbrücke 20 mit hoher Schaltfrequenz, die z.B. zwischen 20 und 100 kHz liegt, eingesetzt werden kann, was bei einer Ausführung, wie in Fig. 3, ohne zusätzliche Entlastungen des Isolated-Gate-Bipolar-Transistors nicht möglich ist.

Weiters ist es möglich, daß die zusätzlichen Hilfsschalter 55, 58, 64 und 66 als normale Transistoren ausgebildet werden können und nicht aus Isolated-Gate-Bipolar-Transistoren gebildet sein müssen.

Weiters sei darauf hingewiesen, daß bei den Verlustleistungen, die durch den Stromschwanz 81 entstehen, noch zusätzliche minimale Verlustleistungen durch die Leitendverluste der weiteren Hilfsschalter 55, 58, 64 und 66 sowie der Dioden 56, 57, 63 und 65 entstehen, was jedoch bei einer Betrachtung der Summe der Verlustleistungen zu einer wesentlichen Herabsetzung der Verlustleistung gegenüber eines normalen Abschaltens eines Isolated-Gate-Bipolar-Transistors zu Folge hat. Es ist auch möglich, daß durch entsprechende Dimensionierung der Kondensatoren 52, 60 der Stromschwanz 81 der Schalter 23 bis 26 reduziert werden kann.

Weiters ist es möglich, daß in der Energieleitung 53 zwischen dem Hilfsschalter 55, 58 und dem Energiespeicher 51 ein Meßwertgeber für die Stromstärke angeordnet ist und daß die Steuervorrichtung bei gegen Null sinkender Stromstärke an die Hilfsschalter 55, 58 bzw. 64, 66 ein Steuersignal zum Abschalten angelegt ist.

Vorteilhaft ist es weiters, wenn in jedem taktzyklus die Zeitspanne zwischen dem Abschalten der Schalter und dem darauffolgenden Abschalten der Hilfsschalter im Mikrosekundenbereich liegt.

Ein weiterer günstiger Verfahrensablauf wird erreicht, wenn die Kapazität der Energiespeicher derart ausgelegt wird, daß durch den Spannungsanstieg an den Knotenpunkten der durch die Schalter verbundenen Leitung mit der Energieleitung gebildet wird, jeder Schaltvorrichtung die unmittelbar zuvor abgeschalteten Schalter im geringen Ausmaß leitend werden.

Vor allem können die einzelnen in den Fig. 1, 2; 3; 4 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Stromquelle
- 2: Wechselspannungsnetz
- 3: Phasenleiter
- 4: Zuleitung
- 5: Zuleitung

- 6: Zuleitung
- 7: Gleichrichter
- 8: Zwischenkreis
- 9: Versorgungsleitung
- 10: Versorgungsleitung

- 11: Ausgang
- 12: Ausgang
- 13: Klemme
- 14: Klemme
- 15: Induktivität

- 16: Schalter
- 17: Diode
- 18: Energiespeicher
- 19: Kondensator
- 20: Vollbrücke

- 21: Schaltvorrichtung
- 22: Schaltvorrichtung
- 23: Schalter
- 24: Schalter
- 25: Schalter

- 26: Schalter
- 27: Leitung
- 28: Leitung
- 29: Verbindungsleitung
- 30: Übertragungsvorrichtung

- 31: Mittelpunktschaltung
- 32: Gleichstromverbraucher
- 33: Ausgang
- 34: Leitung
- 35: Diode

- 36: Ausgang
- 37: Leitung
- 38: Diode
- 39: Leitung
- 40: Steuervorrichtung

- 41: Leitung
- 42: Leitung
- 43: Leitung
- 44: Leitung
- 45: Leitung

- 46: Leitung
- 47: Freilaufdiode
- 48: Freilaufdiode
- 49: Freilaufdiode
- 50: Freilaufdiode

- 51: Energiespeicher
- 52: Kondensator
- 53: Energieleitung
- 54: Leitung
- 55: Hilfsschalter

- 56: Diode
- 57: Diode
- 58: Hilfsschalter
- 59: Energiespeicher
- 60: Kondensator

- 61: Energieleitung
- 62: Leitung
- 63: Diode
- 64: Hilfsschalter
- 65: Diode

- 66: Hilfsschalter
- 67: Leitung
- 68: Leitung
- 69: Leitung
- 70: Leitung

- 71: Stromkennlinie
- 72: Spannungskennlinie
- 73: Zeitpunkt
- 74: Stomkennlinie
- 75: Spannungskennlinie

- 76: Stromkennlinie
- 77: Zeitpunkt
- 78: Spannungsspitze
- 79: Zeitpunkt
- 80: Zeitpunkt
- 81: Stromschwanz
- 82: Zeitpunkt

## Patentansprüche

1. Stromquelle für die Energieversorgung eines Verbraucherkreises eines Gleichstromverbrauchers (32) mit einem zwischen einem Wechselspannungsnetz (2) und einem Verbraucherkreis angeordneten Zwischenkreis (8), der eine am positiven und eine am negativen Potential anliegende Versorgungsleitung (9, 10) aufweist, zwischen welchen zwei zueinander parallel geschaltete Schaltvorrichtungen (21, 22) angeordnet sind, die aus zwei in Reihe geschalteten Schaltern (23 bis 26) bestehen und die zwischen den Schaltern (23 bis 26) jeder Schaltvorrichtung (21, 22) über eine Verbindungsleitung (29) miteinander verbunden sind, in der eine durch einen Trafo gebildete Übertragungsvorrichtung (30) zwischengeschaltet ist, und beidseitig der Übertragungsvorrichtung (30) zwischen der Verbindungsleitung (29) und dem positiven sowie negativen Potential jeweils eine Freilaufdiode (47 bis 50) angeordnet ist und daß zwischen den Schaltern (23 bis 26) jeder Schaltvorrichtung (21, 22) eine Energieleitung (53, 61) angeschlossen ist, wobei in den Energieleitungen (53, 61) mehrere Kondensatoren (52,60) zwischen dem positiven und negativen Potential angeordnet sind und daß zwischen jedem Kondensator (52, 60) und jeder Schaltvorrichtung (21, 22) zwei parallel zueinander angeordnete, gegengleich gepolte Hilfsschalter (55, 58, 64, 66) zwischengeschaltet sind und daß die Schalter (23 bis 26) mit einer Steuervorrichtung (40) verbunden sind, dadurch gekennzeichnet, daß die Schalter (23 bis 26) der Schaltvorrichtungen (21, 22) durch Isolated-Gate-Bipolar-Transistoren gebildet sind und daß jeder Schaltvorrichtung (21, 22) einer der Kondensatoren (52, 60) und jeweils zwei der Hilfsschalter (55, 58, 64, 80) zugeordnet sind, wobei den Hilfsschaltern (55, 58, 64, 80) an ihren Eingängen bzw. Ausgängen eine Diode (56, 57, 63, 65) in Durchlaßrichtung vorgeschaltet ist und daß die Energieleitung (53) mit dem einen Kondensator (52) an dem positiven Potential und die Energieleitung (61) mit dem weiteren Kondensator (60) an dem negativen Potential angeschlossen ist.

2. Stromquelle nach Anspruch 1, dadurch gekennzeichnet, daß die Hilfsschalter (55, 58, 64, 66) als Power-MOS-Transistoren ausgebildet werden.

3. Stromquelle nach Anspruch 1 oder 2, dadurch gekennzeichnet, daß in der Energieleitung (53) zwischen dem Hilfsschalter (55, 58) und dem Energiespeicher (51) ein Meßwertgeber für die Stromstärke angeordnet ist und daß die Steuervorrichtung bei gegen Null sinkender Stromstärke an die Hilfsschalter (55, 58) bzw. (64, 66) ein Steuersignal zum Abschalten angelegt ist.

## Claims

1. Current source for power supply of a consumer circuit of a direct current consumer (32) with an intermediate circuit (8) arranged between an alternating voltage network (2) and a consumer circuit, which has one supply line (9, 10) with positive potential and one with negative potential, between which two parallel switched switching devices (21, 22) are arranged, which comprise two switches (23 to 26) switched in a row, and which between the switches (23 to 26) of each switching device (21, 22) are connected together by a connecting line (29), in which a transmission device (30) formed by a transformer is interconnected, and on both sides of the transmission device (30) between the connecting line (29) and the positive and negative potential a free-running diode (47 to 50) is arranged, and between the switches (23 to 26) of each switching device (21, 22) a power line (53, 61) is connected, wherein in the power lines (53, 61) several capacitors (52, 60) are arranged between the positive and negative potential, and between each capacitor (52, 60) and each switching device (21, 22) two parallel arranged opposite poled auxiliary switches (55, 58, 64, 66) are interconnected, and the switches (23 to 26) are connected with a control device (40), characterised in that the switches (23 to 26) of the switching devices (21, 22) are formed by isolated gate bipolar transistors, and in that to each switching device (21, 22) one of the capacitors (52, 60) and two of the auxiliary switches (55, 58, 64, 80) respectively are assigned, wherein a diode (56, 57, 63, 65) is connected in forward conducting direction before the auxiliary switches (55, 58, 64, 80) to their inputs and outputs and in that the power line (53) is connected to the capacitor (52) with the positive potential and the power line (61) to the additional capacitor (60) with the negative potential.

2. Current source according to claim 1, characterised in that the auxiliary switches (55, 58, 64, 66) are in the form of power MOS transistors.

3. Current source according to claim 1 or 2, characterised in that in the power line (53) between the auxiliary switch (55, 58) and the power store (51) a detecting element for the current strength is arranged, and in that the control device with a current strength falling to zero at the auxiliary switches (55, 58) or (64, 66) a control signal is set to switch off.

## Revendications

1. Source de courant pour l'alimentation en énergie d'un circuit d'utilisation d'un usager de courant continu (32) avec un circuit intermédiaire (8) disposé entre un réseau de tension alternative (2) et un circuit d'utilisation, qui présente des lignes d'alimentation (9, 10) s'appliquant au potentiel positif et au potentiel négatif entre lesquelles sont disposés deux dispositifs de commutation (21, 22) commutés parallèlement l'un à l'autre qui sont constitués de deux interrupteurs (23 à 26) montés en série et qui sont reliés entre les interrupteurs (23 à 26) de chaque dispositif de commutation (21, 22) par une ligne de liaison (29) dans laquelle est intercalé un dispositif de transmission (30) formé par un transformateur, et où il est disposé des deux côté du dispositif de transmission (30) entre la ligne de liaison (29) et les potentiels positif ainsi que négatif respectivement une diode de roue libre (47 à 50) et en ce qu'il est raccordé entre les interrupteurs (23 à 26) de chaque dispositif de commutation (21, 22) une ligne d'énergie (53, 61), où sont disposés dans les lignes d'énergie (53, 61) plusieurs condensateurs (52, 60) entre le potentiel positif et le potentiel négatif, et en ce que sont intercalés entre chaque condensateur (52, 60) et chaque dispositif de commutation (21, 22) deux interrupteurs auxiliaires (55, 58, 64, 66) disposés parallèlement l'un à l'autre, polarisé d'une manière diamétralement opposée et en ce que les interrupteurs (23 à 26) sont reliés à un dispositif de commande (40), caractérisée en ce que les interrupteurs (23 à 26) des dispositifs de commutation (21, 22) sont constitués de transistors bipolaires à grilles isolées et que sont associés à chaque dispositif de commutation (21, 22) l'un des condensateurs (52, 60) et respectivement deux des interrupteurs auxiliaires (55, 58, 64, 80), où il est placé en amont des interrupteurs auxiliaires (55, 58, 64, 80) à leurs entrées respectivement sorties une diode (56, 57, 63, 65) dans le sens de conduction et en ce que la ligne d'énergie (53) est raccordée par l'un des condensateurs (52) au potentiel positif et la ligne d'énergie (61) par l'autre condensateur (60) au potentiel négatif.

2. Source de courant selon la revendication 1, caractérisée en ce que les interrupteurs auxiliaires (55, 58, 64, 66) sont réalisés comme transistors de puissance MOS.

3. Source de courant selon la revendication 1 ou 2, caractérisée en ce qu'il est disposé dans la ligne d'énergie (53) entre l'interrupteur auxiliaire (55, 58) et l'accumulateur d'énergie (51) un capteur de mesure de l'intensité de courant et en ce que le dispositif de commande, lors d'une intensité de courant descendant vers zéro, applique aux interrupteurs auxiliaires (55, 58) respectivement (64, 66) un signal de commande pour la coupure.
